(19) Europäisches Patentamt
European Patent Office
Office européen des brevets

(11) EP 2 107 871 B1

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **07819832.2**

(22) Anmeldetag: **16.11.2007**

(51) Int Cl.:
***A01N 43/16*** *(2006.01)* ***A01N 51/00*** *(2006.01)*
***A01N 47/02*** *(2006.01)* ***A01N 43/22*** *(2006.01)*
***A01N 43/56*** *(2006.01)* ***A01P 7/00*** *(2006.01)*

(86) Internationale Anmeldenummer:
**PCT/EP2007/009898**

(87) Internationale Veröffentlichungsnummer:
**WO 2008/064778 (05.06.2008 Gazette 2008/23)**

(54) **INSEKTIZIDE WIRKSTOFFKOMBINATIONEN (FORMONONETIN + INSEKTIZIDE)**
INSECTICIDAL ACTIVE INGREDIENT COMBINATIONS (FORMONONETINS + INSECTICIDES)
COMBINAISONS D'AGENTS ACTIFS INSECTICIDES (FORMONONETINE + INSECTICIDES)

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.11.2006 DE 102006056544**

(43) Veröffentlichungstag der Anmeldung:
**14.10.2009 Patentblatt 2009/42**

(73) Patentinhaber: **Plant Health Care, Inc.**
**Raleigh NC 27608 (US)**

(72) Erfinder:
- **ANDERSCH, Wolfram**
**51469 Bergisch Gladbach (DE)**
- **HUNGENBERG, Heike**
**40764 Langenfeld (DE)**
- **MANSFIELD, Darren**
**51515 Kürten (DE)**

(74) Vertreter: **Grünecker Patent- und Rechtsanwälte PartG mbB**
**Leopoldstraße 4**
**80802 München (DE)**

(56) Entgegenhaltungen:
**WO-A-00/54568** **WO-A-91/07868**
**WO-A-97/28150** **WO-A-2008/086948**
**WO-A-2008/092580** **WO-A-2008/103422**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 107 871 B1

## Beschreibung

Die vorliegende Erfindung betrifft neue Wirkstoffkombinationen, die aus Formononetin einerseits und bekannten insektiziden Wirkstoffen der Gruppen der Chloronicotinyle/Neonicotinoide und der Organophosphate andererseits bestehen. Diese Wirkstoffkombinationen eignen sich sehr gut zur Bekämpfung unerwünschter tierischen Schädlingen wie Insekten oder Akariden sowie pflanzenparasitären Nematoden.

Es ist bereits bekannt, dass Formononetin der Formel (I),

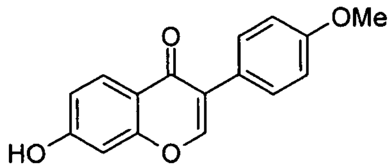

(I)

ein Isoflavon, wleches vom Rotklee (*Trifolium pratens*) produziert wird, zu einer Erhöhung des Wurzelwachstums von Nutzpflanzen führt (US 5,002,603).

Weiterhin ist bekannt, dass zahlreiche Chlornikotinyle, Phosphorsäureester, Carbamate, Heterocyclen, Organozinn-Verbindungen, Benzoylharnstoffe und Pyrethroide insektizide, akarizide und nematizide Eigenschaften besitzen (vgl. z.B. EP 0 192 060, US 2,758,115, US 3,309,266, GB 1,181,657, WO 93/22297 A1, WO 93/10083 A1, DE 26 41 343 A1, EP 347 488 A1, EP 210 487 A1, US 3,264,177 und EP 234 045 A2). Allerdings ist auch die Wirkung dieser Stoffe nicht in allen Belangen befriedigend.

Es wurde nun überraschenderweise gefunden, dass Formononetin zu einer Erhöhung der Wirkung insektizider, akarizider oder nematizider Wirkstoffe der Gruppen der Chloronicotinyle/ Neonicotinoide und der Organophosphate führt.

Ferner wurde überraschenderweise gefunden, dass insektizide, akarizide oder nematizide Wirkstoffe der Gruppen der Chloronicotinyle/Neonicotinoide und der Organophosphate zu einer Erhöhung des Ertrags oder des Wachstums von mit Formononetin behandelten Kulturpflanzen führen, welche über den Effekt einer alleinigen Formononetinbehandlung oder einer alleinigen Behandlung mit diesen insektiziden, akariziden oder nematiziden Wirkstoffen oder über die Summe beider Einzelwirkungen hinausgeht.

Es wurden nun neue Wirkstoffkombinationen mit sehr guten Eigenschaften für die Bekämpfung von Insekten, Spinnentieren oder pflanzenparasitären Nematoden gefunden, welche neben Formononetin mindestens einen Wirkstoff der aus den folgenden Gruppen (2.1) und (3.2) ausgewählt ist, enthalten.

(2.1) Chloronicotinyle/Neonicotinoide (z.B. Acetamiprid, Clothianidin, Dinotefuran, Imidacloprid, Nitenpyram, Nithiazine, Thiacloprid, Thiamethoxam, Imidaclotiz ((2E)-1-[(2-chloro-1,3-thiazol-5-yl)methyl]-N-nitroimidazolidin-2-imine), AKD 1022 ((2E)-1-[(2-chloro-1,3-thiazol-5-yl)methyl]-3,5-dimethyr-N-nitro-1,3,5-triazinan-2-imine));

Die erfindungsgemäßen Wirkstoffkombinationen enthalten bevorzugt folgende Acetylcholin-Rezeptor-Agonisten/-Antagonisten der Gruppe (2.1) :

(2.1.1) Clothianidin

(2.1.2) Imidacloprid

(2.1.3) Thiacloprid

(2.1.4) Thiamethoxam

(2.1.5) Acetamiprid

(2.1.6) Dinotefuran

(2.1.7) Nitenpyram

(2.1.8.) Imidaclotiz

Die erfindungsgemäßen Wirkstoffkombinationen enthalten besonders bevorzugt folgende Acetylcholin-Rezeptor-Agonisten/-Antagonisten der Gruppe (2):

(2.1.1) Clothianidin

(2.1.2) Imidacloprid

(2.1.3) Thiacloprid

(2.1.4) Thiamethoxam

(2.1.5) Acetamiprid

Die Gruppe (3.2) der Acetylcholinesterase (AChE) Inhibitoren umfasst im Einzelnen folgende Wirkstoffe:

(3.2) Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion).

Die erfindungsgemäßen Wirkstoffkombinationen enthalten bevorzugt folgende Acetylcholinesterase (AChE) Inhibitoren der Gruppe (3.2) :

(3.2.1) Tebupirimphos
(3.2.2) Cadusaphos
(3.2.3) Oxamyl
(3.2.4) Fosthiazate
Chlorpyriphos-(methyl-/ethyl

Die erfindungsgemäßen Wirkstoffskombinationen enthalten besonders bevorzugt folgende Acetylcholinesterase (AChE) Inhibitoren der Gruppe (3.2):

(3.2.1) Ethoprophos
(3.2.2) Fenamiphos

Besonders bevorzugte erfindungsgemäße Kombinationen sind in der nachfolgenden Tabelle 1 gezeigt.

Tabelle 1

| **Wirkstoff 1** | **Wirkstöff der Gruppen** (2.1) und (3.2) |
|---|---|
| Formononetin | (2.1.1) Clothianidin |
| Formononetin | (2.1.2) Imidacloprid |
| Formononetin | (2.1.3) Thiacloprid |
| Formononetin | (2.1.4) Thiamethoxam |
| Formononetin | (3.2.1) Tebuprimophos |
| Formononetin | (3.2.2) Cadusaphos |
| Formononetin | (3.2.3) Oxamyl |

Alle Wirkstoffkombinationen (jede Zeile der Tabelle 1) stellen unabhängige Lösungen der Aufgabe dar.
Erfindungsgemäß können statt Formononetin auch seine Salze, insbesondere seine Alkalimetallsalze, Verwendung finden.

Die Wirkstoffkombinationen können darüber hinaus auch weitere fungizide, akarizide oder insektizide wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I) und den Mischpartner in den in der nachfolgenden Tabelle angegeben bevorzugten Mischungsverhältnissen, wobei die Mischungsverhältnisse basieren auf Gewichtsverhältnissen.

Das Verhältnis ist zu verstehen als Formononetin : Mischpartner.

**Tabelle 2:** Mischungsverhältnisse

| Mischpartner (Gruppe) | bevorzugtes Mischungsverhältnis | besonders bevorzugtes Mischungsverhältnis |
|---|---|---|
| (2.1) Chloronicotinyle/Neonicotinoide | 5 00 : 1 bis 1 : 50 | 125 : 1 bis 1 : 25 |
| (3.2) Organophosphate | 5 00 : 1 bis 1 : 50 | 125 : 1 bis 1 : 25 |

Die erfindungsgemäßen Wirkstoffkombinationen eignen sich zur Bekämpfung von tierischen Schädlingen, vorzugsweise Arthropoden und Nematoden, insbesondere Nematoden und Insekten, die in der Landwirtschaft, der Tiergesundheit, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp.

Aus der Ordnung der Phthiraptera z.B. Pediculus humanus corporis, Haematopinus spp., Linognathus spp., Trichodectes spp., Damalinia spp.

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium comi, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes

spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsfor-men in Mischung mit

Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die zum Schutz von Holz und Holzwerkstoffen verwendeten insektiziden Mittel oder Konzentrate enthalten den erfindungsgemäßen Wirkstoff in einer Konzentration von 0,0001 bis 95 Gew.-%, insbesondere 0,001 bis 60 Gew.-%.

Die Menge der eingesetzten Mittel bzw. Konzentrate ist von der Art und dem Vorkommen der Insekten und von dem Medium abhängig. Die optimale Einsatzmenge kann bei der Anwendung jeweils durch Testreihen ermittelt werden. Im allgemeinen ist es jedoch ausreichend 0,0001 bis 20 Gew.-%, vorzugsweise 0,001 bis 10 Gew.-%, des Wirkstoffs, bezogen auf das zu schützende Material, einzusetzen.

Als Lösungs- und/oder Verdünnungsmittel dient ein organisch-chemisches Lösungsmittel oder Lösungsmittelgemisch und/oder ein öliges oder ölartiges schwer flüchtiges organisch-chemisches Lösungsmittel oder Lösungsmittelgemisch und/oder ein polares organisch-chemisches Lösungsmittel oder Lösungsmittelgemisch und/oder Wasser und gegebenenfalls einen Emulgator und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwerflüchtige, wasserunlösliche, ölige und ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindelöl mit einem Siedebereich von 250 bis 350°C, Petroleum bzw. Aromaten vom Siedebereich von 160 bis 280°C, Terpentinöl und dgl. zum Einsatz.

In einer bevorzugten Ausführungsform werden flüssige aliphatische Kohlenwasserstoffe mit einem Siedebereich von 180 bis 210°C oder hochsiedende Gemische von aromatischen und aliphatischen Kohlenwasserstoffen mit einem Siedebereich von 180 bis 220°C und/oder Spindeöl und/oder Monochlornaphthalin, vorzugsweise $\alpha$-Monochlornaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30°C, vorzugsweise oberhalb 45°C, aufweist und daß das Gemisch in diesem Lösungsmittelgemisch löslich oder emulgierbar ist.

Nach einer bevorzugten Ausführungsform wird ein Teil des organisch-chemischen Lösungsmittel oder Lösungsmittelgemisches oder ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycolether, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemische Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl-oder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Die Wirkstoffkombinationen eignen sich auch zur Bekämpfung von tierischen Schädlingen, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp.

Aus der Ordnung der Chilopoda z.B. Geophilus spp.

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga camaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Phthirus pubis.

Aus der Ordnung der Heteroptera z.B. Cimex hemipterus, Cimex lectularius, Rhodinus prolixus, Triatoma infestans.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Insbesondere eignen sich die erfindungsgemäßen Mischungen zur Behandlung von Saatgut. Bevorzugt sind

dabei die vorstehend als bevorzugt oder besonders bevorzugt genannten erfindungsgemäßen Kombinationen zu nennen. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufriedenstellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt wird, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einem erfindungsgemäßen Mittel behandelt wird. Die Erfindung bezieht sich ebenfalls auf die Verwendung der erfindungsgemäßen Mittel zur Behandlung von Saatgut zum Schutz des Saatguts und der daraus entstehenden Pflanze vor Schädlingen. Weiterhin bezieht sich die Erfindung auf Saatgut, welches zum Schutz vor Schädlingen mit einem erfindungsgemäßen Mittel behandelt wurde.

Ebenso ist es als vorteilhaft anzusehen, dass die erfindungsgemäßen Mischungen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Mitteln können bestimmte Schädlinge bereits durch die Expression des z.B. insektiziden Proteins kontrolliert werden, und zusätzlich durch die erfindungsgemäßen Mittel vor Schäden bewahrt werden.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen

bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus *Bacillus thuringiensis* (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoffmischungen behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide, akarizide und nematizide Wirkung der erfindungsgemäßen Wirkstoffkombinationen kann beispielsweise mit den in WO 2005/102056 beschriebenen Methoden ermittelt werden. Während die einzelnen Wirkstoffe in ihrer Wirkung Schwächen aufweisen, zeigen die Kombinationen eine Wirkung, die über eine einfache Wirkungssummierung hinausgeht.

Ein synergistischer Effekt liegt bei Insektiziden, Akariziden und Nematiziden immer dann vor, wenn die insektizide-, akarizide- bzw. nematizide Wirkung der Wirkstoffkombinationen größer ist als die Summe der Wirkungen der einzeln applizierten Wirkstoffe.

Die zu erwartende insektizide, akarizide oder neamtizide Wirkung für eine gegebene Kombination zweier Wirkstoffe kann nach S.R. Colby ("Calculating Synergistic and Antagonistic Responses of Herbicide Combinations", Weeds 1967, 15, 20-22) wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

Beispiel A

**Meloidogyne incognita -Test (MELGIN)**

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Salatsamen werden mit der gewünschten Menge Formononetin gebeizt. Gefäße werden mit Mycorrhiza infizierter Erde, Wirkstofflösung, *Meloidogyne incognita*-Ei-Larven-Suspension und den behandelten Salatsamen gefüllt. Die Salatsamen keimen und die Pflänzchen entwickeln sich. An den Wurzeln entwickeln sich die Gallen.

Nach der gewünschten Zeit wird die nematizide Wirkung an Hand der Gallenbildung in % bestimmt. Dabei bedeutet 100 %, dass keine Gallen gefunden wurden; 0 % bedeutet, dass die Zahl der Gallen an den behandelten Pflanzen der der unbehandelten Kontrolle entspricht.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

Tabelle A

| **Pflanzenschädigende Nematoden<br>Meloidogyne incognita - Test** | | | |
|---|---|---|---|
| **Wirkstoff** | **Konzentration** | **Wirkung in % nach 21$^{d}$** | |
| **Formononetin der Formel (I)** | 0.5 mg ai/Saatkorn | 3,3 | |
| **Nemacur CS 240** | 0,03 ppm | 0 | |
| **Formononetin + Nemacur CS 240**<br>erfingdungsgemäß | **0,5 mg ai/Saatkorn + 0,03 ppm** | **gef.*** <br>**43,3** | **ber.****<br>**3,3** |
| *gef.=gefundeneWirkung<br>** ber. = nach der Colby-Formel berechnete Wirkung | | | |

Beispiel B

**Grenzkonzentrationstest / Bodeninsekten (Saatgutbeizung)**

| | |
|---|---|
| Testinsekt: | **Diabrotica balteata - Larven im Boden** |
| Testpflanze: | ZEAMI (Körnermais) |

Je nach gewünschter Aufwandmenge wird entsprechend der vorbereiteten, abgewogenen Saatgutmenge die errechnete Menge der Formulierung eingewogen. Unter Zugabe von ca. 200 ul Wasser wird das Maissaatgut auf dem Rüttler mit Hilfe eines Einmalspatels gebeizt und zurückgetrocknet.

Die Maisaussaat erfolgt in Papptöpfen (mind. 2 Töpfe pro Variante), die mit ca. 300 ml sandigem, mit Mycorrhiza inokuliertem Lehm gefüllt werden. Mit einem Stempel wird die Erde etwas angedrückt und ca. 30 ml Wasser mit einer Brauseflasche aufgegossen. Es werden 5 Maiskörner pro Topf ausgelegt, angedrückt, mit ca. 100 ml Erde aufgefüllt und mit einem Glasdeckel abgedeckt. Inkubation bei 20° C.

Nach 10 Tagen werden pro Topf ca. 15 Käferlarven (*Diabrotica balteata*) aufgesetzt. Nach der gewünschten Zeit nach Infektion wird die Wirkung in % Abbott bestimmt.

Bei diesem Test zeigte die folgende Wirkstoffkombination gemäß vorliegender Anmeldung eine synergistisch

verstärkte Wirksamkeit im Vergleich zu den einzeln angewendeten Wirkstoffen:

Tabelle B1

| Pflanzenschädigende Insekten<br>Diabrotica balteata - Test | | |
|---|---|---|
| **Wirkstoff** | **Konzentration mg ai/Saatkorn** | **Wirkung in % nach 10$^d$** |
| **Myconate (Formononetin)**<br>**FS 500** | 0.5 | 0 |
| **Imidacloprid**<br>**FS 600** | 0,015 | 72,3 |
| **Myconate + Imidacloprid**<br><br>erfindungsgemäß | **0,5 + 0,015 mg ai/Saatkorn** | **gef.*** 95,7 **ber.**** 72,3 |
| *gef.=gefundeneWirkung<br>** ber. = nach der Colby-Formel berechnete Wirkung | | |

**Patentansprüche**

**1.** Insektizide, akarizide oder nematizide Wirkstoffkombinationen umfassend Formononetin der Formel (1) oder dessen Salze

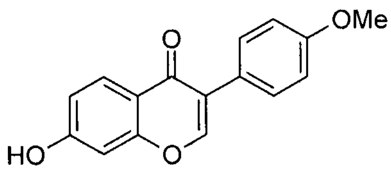

(I)

und mindestens einen Wirkstoff der aus den folgenden Gruppen ausgewählt ist:

Gruppe (2.1): Chloronicotinyle/Neonicotinoide;
Gruppe (3.2): Organophosphate.

**2.** Wirkstoffkombinationen gemäß Anspruch 1, wobei die Wirkstoffe der Gruppen (2.1) bis (3.2) aus der folgenden Liste ausgewählt sind:

(2.1.1) Clothianidin;
(2.1.2) Imidacloprid;
(2.1.3) Thiacloprid;
(2.1.4) Thiamethoxam;
(2.1.5) Acetamiprid;
(2.1.6) Dinotefuran;
(2.1.7) Nitenpyram;
(2.1.8) Imidaclotiz;
(3.2.1) Tebupirimfos;
(3.2.2) Cadusafos;
(3.2.3) Phoxim;
(3.2.4) Fosthiazat;
(3.2.5) Ethoprophos;
(3.2.6) Fenamiphos

3. Wirkstoffkombination gemäß Anspruch 1 oder 2 enthaltend Formononetin und Clothianidin.

4. Wirkstoffkombination gemäß Anspruch 1 oder 2 enthaltend Formononetin und Imidacloprid.

5. Wirkstoffkombinationen gemäß Anspruch 1 oder 2 enthaltend Formononetin und Thiamethoxam.

6. Wirkstoffkombinationen gemäß Anspruch 1 oder 2 enthaltend Formononetin und Fenamiphos.

7. Synergistische Wirkstoffkombinationen enthaltend eine Wirkstoffkombination gemäß einem der Ansprüche 1 bis 6.

8. Verwendung von Wirkstoffkombinationen gemäß einem der Ansprüche 1 bis 6 zur Bekämpfung unerwünschter tierischer Schädlinge.

9. Verfahren zum Bekämpfen unerwünschter tierischer Schädlinge, **dadurch gekennzeichnet, dass** man Wirkstoffkombinationen gemäß einem der Ansprüche 1 bis 6 auf die Schädlinge und/oder ihren Lebensraum einwirken lässt.

10. Verfahren zum Herstellen von Pflanzenschutzmitteln, **dadurch gekennzeichnet, dass** man eine Wirkstoffkombination gemäß einem der Ansprüche 1 bis 6 mit oberflächenaktiven Mitteln und/oder Streckmitteln vermischt.

11. Verwendung von Wirkstoffkombinationen gemäß einem der Ansprüche 1 bis 6 zur Behandlung von Saatgut.

12. Verwendung von Wirkstoffkombinationen gemäß einem der Ansprüche 1 bis 6 zur Behandlung transgener Pflanzen.

13. Verwendung von Wirkstoffkombinationen gemäß einem der Ansprüche 1 bis 6 zur Behandlung des Saatguts transgener Pflanzen.

14. Saatgut, umfassend eine Wirkstoffkombination gemäß einem der Ansprüche 1 bis 6.

15. Verfahren zum Bekämpfen unerwünschter tierischer Schädlinge, **dadurch gekennzeichnet, dass** man Wirkstoffkombinationen gemäß Anspruch 1 oder 2 auf die unerwünschten tierischen Schädlinge und/oder deren Lebensraum und/oder Saatgut ausbringt.

**Claims**

1. An active insecticidal, nematicidal, or acaricidal compound combination comprising formononetin of formula (I) and/or its salt thereof

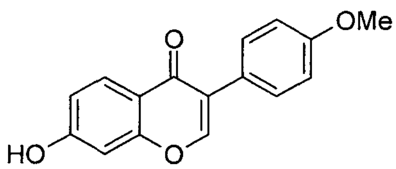

(I)

and at least one active compound selected from groups:

Group (2.1) chloronicotinyls/neonicotinoids;
Group (3.2) organophosphates;

2. The active compound combination according to claim 1, wherein the active compounds of group (2.1) to (3.2) are selected from the following list:

(2.1.1) clothianidin
(2.1.2) imidacloprid
(2.1.3) thiacloprid
(2.1.4) thiamethoxam
(2.1.5) acetamiprid

(2.1.6) dinotefuran
(2.1.7) nitenpyram
(2.1.7) nitenpyram
(2.1.8) imidaclotiz
(3.2.1) tebupirimfos
(3.2.2) cadusafos
(3.2.3) phoxim
(3.2.4) fosthiazat
(3.2.5) ethoprophos
(3.2.6) fenamiphos

**3.** The active compound combination according to claim 1 or 2 comprising formononetin and clothianidin.

**4.** The active compound combination according to claim 1 or 2 comprising formononetin and imidacloprid.

**5.** The active compound combination according to claim 1 or 2 comprising formononetin and thiamethoxam.

**6.** The active compound combination according to claim 1 or 2 comprising formononetin and fenamiphos.

**7.** A synergistic active compound combination comprising an active compound combination according to any one of claims 1 to 6.

**8.** Use an active compound combination according to any one of claims 1 to 6 for controlling unwanted animal pests.

**9.** A method of controlling unwanted animal pests, **characterized by** allowing the active compound combination according to any one of claims 1 to 8 to act on pests and/or a habitat thereof.

**10.** A process for preparing a pesticide, **characterized by** mixing an active compound combination according to any one of claims 1 to 6 with a surfactant and/or extender.

**11.** Use an active compound combination according to any one of claims 1 to 6 for applying to seed.

**12.** Use an active compound combination according to any one of claims 1 to 6 for applying to transgenic plants.

**13.** Use an active compound combination according to any one of claims 1 to 6 for applying to seed of transgenic plants.

**14.** Seed comprising an active compound combination according to any one of claims 1 to 6.

**15.** A method of controlling unwanted animal pests, **characterized by** applying the active compound combination according to claims 1 or 2 to unwanted animal pests and/or a habitat thereof and/or to seed.

**Revendications**

**1.** Associations de substances actives insecticides, acaricides ou nématicides, comprenant de la formononétine de formule (1) ou ses sels

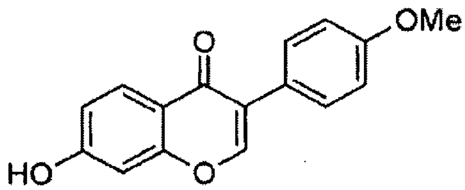

(I)

et au moins une substance active qui est choisie dans les groupes suivants :

groupe (2.1) : chloronicotinyles/néonicotinoïdes ;

groupe (3.2) : organophosphates.

2. Associations de substances actives selon la revendication 1, dans lesquelles les substances actives des groupes (2.1) à (3.2) sont choisies dans la liste suivante :

(2.1.1) clothianidine ;
(2.1.2) imidaclopride ;
(2.1.3) thiaclopride ;
(2.1.4) thiaméthoxame ;
(2.1.5) acétamipride ;
(2.1.6) dinotéfurane ;
(2.1.7) nitenpyram ;
(2.1.8) imidaclotiz ;
(3.2.1) tébupirimfos ;
(3.2.2) cadusafos ;
(3.2.3) phoxime ;
(3.2.4) fosthiazate ;
(3.2.5) éthoprophos ;
(3.2.6) fénamiphos.

3. Associations de substances actives selon la revendication 1 ou 2, contenant de la formononétine et de la clothianidine.

4. Associations de substances actives selon la revendication 1 ou 2, contenant de la formononétine et de l'imidaclopride.

5. Associations de substances actives selon la revendication 1 ou 2, contenant de la formononétine et du thiaméthoxame.

6. Associations de substances actives selon la revendication 1 ou 2, contenant de la formononétine et du fénamifos.

7. Associations synergiques de substances actives, contenant une association de substances actives selon l'une quelconque des revendications 1 à 6.

8. Utilisation d'associations de substances actives selon l'une quelconque des revendications 1 à 6, pour la lutte contre des ravageurs animaux indésirables.

9. Procédé pour la lutte contre des ravageurs animaux indésirables, **caractérisé en ce qu'**on fait agir des associations de substances actives selon l'une quelconque des revendications 1 à 6 sur les ravageurs et/ou leur habitat.

10. Procédé pour la fabrication de produits phytosanitaires, **caractérisé en ce qu'**on mélange une association de substances actives selon l'une quelconque des revendications 1 à 6 avec des agents tensioactifs et/ou des excipients.

11. Utilisation d'associations de substances actives selon l'une quelconque des revendications 1 à 6 pour le traitement de semences.

12. Utilisation d'associations de substances actives selon l'une quelconque des revendications 1 à 6 pour le traitement de plantes transgéniques.

13. Utilisation d'associations de substances actives selon l'une quelconque des revendications 1 à 6 pour le traitement de semences de plantes transgéniques.

14. Semence, contenant une association de substances actives selon l'une quelconque des revendications 1 à 6.

15. Procédé pour la lutte contre des ravageurs animaux indésirables, **caractérisé en ce qu'**on applique des associations de substances actives selon la revendication 1 ou 2 sur les ravageurs animaux indésirables et/ou leur habitat et/ou des semences.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5002603 A
- EP 0192060 A
- US 2758115 A
- US 3309266 A
- GB 1181657 A
- WO 9322297 A1
- WO 9310083 A1
- DE 2641343 A1
- EP 347488 A1
- EP 210487 A1
- US 3264177 A
- EP 234045 A2
- WO 2005102056 A


### In der Beschreibung aufgeführte Nicht-Patentliteratur


- **S.R. COLBY.** Calculating Synergistic and Antagonistic Responses of Herbicide Combinations. *Weeds,* 1967, vol. 15, 20-22